# EUROPEAN PATENT SPECIFICATION

(11) **EP 2 439 810 B1**
(45) Date of publication and mention of the grant of the patent: **16.01.2013**
(21) Application number: 11007973.8
(22) Date of filing: 30.09.2011
(51) Int. Cl.: H01M 10/42

(54) **Battery pack**
Batteriepack
Bloc-batteries

(30) Priority: 01.10.2010 JP 2010223792
(43) Date of publication of application: 11.04.2012
(73) Proprietor: Sanyo Electric Co., Ltd., Osaka 570-8677 (JP)
(72) Inventor: Yoneda, Haruhiko, Moriguchi-shi Osaka 570-8677 (JP); Yamagami, Sadao, Moriguchi-shi Osaka 570-8677 (JP)
(74) Representative: Hertz, Oliver

(56) References cited:
- WO-A2-2010/040106
- US-A1- 2008 192 399
- US-A1- 2009 117 458

## Description

### BACKGROUND OF THE INVENTION

### 1. Field of the Invention

The present invention relates to a battery pack primarily suited for high-current discharge applications such as in an electric powered bicycle.

### 2. Description of the Related Art

The number of parallel-connected battery cells in a battery pack can be increased to increase the output current, and the number of series-connected battery cells can be increased to increase the output voltage. Accordingly, in applications requiring high output such as in an electric powered bicycle, battery pack output can be increased by connecting a plurality of battery cells in parallel, and then connecting those parallel-connected units in series. Because of the high-current flow in this type of battery pack, battery cell temperature can become high during high-current charging and discharging, and battery cell malfunctions such as high-current short circuits can occur due to moisture ingress. As a strategy to deal with these abnormal conditions, a protection circuit is provided to cut-off current when an abnormality is detected. The protection circuit monitors parameters such as the voltage and temperature of each battery cell and physically terminates charging and/or discharging by opening a switch or other device when a parameter exceeds a threshold value and is judged abnormal. For example, the protection circuit can monitor battery cell voltage during battery pack charging, decide that an abnormality has occurred when an abnormal battery cell voltage is detected, and issue a stop-charging signal to the battery charger to cut-off the charging current.

However, when an abnormality occurs in the protection circuit itself, an undesirable situation results where it may not be possible to terminate the flow of high-current. For this reason, a battery pack provided with a spare protection circuit has been proposed. This type of battery pack can stop current flow with the spare protection circuit even if the main protection circuit has malfunctioned. However, because of constraints on the space to house a spare protection circuit and associated cost, prior-art battery packs often mount the spare protection circuit on the same circuit board as the main protection circuit. As a result, when physical damage such as an impact causes open circuits in part of the circuitry, it is possible not only for the main protection circuit to be disabled but also for the spare protection circuit to be impaired. This spare protection circuit configuration is inadequate as a backup. To resolve this issue, independent protection circuits can be devised as two separate systems. With this scheme, however, there is fear not only of multiplicative cost, but also of the difficulty in allocating space for the two protection circuit systems.

The present invention was developed considering the prior-art problems. Thus, it is a first object of the present invention to provide a battery pack that can terminate high-current flow and protect the battery cells even when an abnormality develops in the protection circuit.

Since the battery pack is used outdoors, it is necessary to protect the battery cells from moisture ingress as well as from excessive current flow. To prevent battery cell and circuit board corrosion and short circuits due to external moisture ingress, the present applicant previously developed a battery pack with a water-resistant structure (for example, Japanese Laid-Open Patent Publication 2009-218012).

The previously developed battery pack covers the battery cell assembly, which is the battery pack core that is housed inside a case, in a water-resistant vinyl plastic bag and seals-off the open-end. However, since external connecting terminals are necessary to extract power from the battery pack, lead-wires must be run-out from the battery pack core and connected to the external connecting terminals. For this reason, lead-wires must be passed through the sealed-off end of the water-resistant bag, which interferes with the water-resistant structure and makes it difficult to sufficiently avert moisture ingress.

The present invention was developed further considering these types of problems. Thus, it is a second object of the present invention to provide a battery pack that can easily achieve a water-resistant structure, and can pre-empt and prevent moisture ingress to protect the battery cells.

### SUMMARY OF THE INVENTION

To achieve the objects described above, the first battery pack of the present invention is provided with a battery block 10 having a plurality of battery cells 1 housed in a battery holder 2, a first circuit board 6 attached to the battery holder 2 of the battery block 10 to carry a first protection circuit 25 that can detect battery cell 1 abnormality and cut-off current flow, a second circuit board 9 to carry a second protection circuit 26 that is a separate structure from the first protection circuit 25 and is capable of detecting battery cell 1 abnormality and cutting-off current flow independently from the first protection circuit 25, an outer case 4 to house the battery block 10, and an output connector 15 established on the outside the outer case 4 to deliver battery block 10 output to the outside. The second circuit board 9 can be smaller than the first circuit board 6 and can be disposed in a corner region inside the outer case 4 physically separated from the first circuit board 6. Since the second circuit board is disposed in a corner region of the outer case separated from the first circuit board, even if the first circuit board is exposed to physical impact, propagation of the impact to the second circuit board can be avoided, and the probability of simultaneous damage to both the first circuit board and the second circuit board can be reduced.

In the second battery pack of the present invention, the second circuit board 9 can be retained in a corner region of the outer case 4 in an orientation inclined with respect to the first circuit board 6. Since this forms a shock-absorbing space between the second circuit board and the corner region of the outer case, damage to the corner region can absorb an impact and mitigate affect on the second circuit board even if the outer case happens to be dropped or impacted. This can increase the probability that the second protection circuit will escape damage and improve the reliability of the protection circuitry.

In the third battery pack of the present invention, the second circuit board 9 can be mounted on the battery holder 2 of the battery block 10 to retain it in an inclined orientation in a corner region of the outer case 4. Since the second circuit board can be easily mounted in an inclined orientation in a corner region of the outer case, a shock-absorbing space can be formed between the second circuit board and the corner region to act as a buffer and protect the second protection circuit.

In the fourth battery pack of the present invention, the second threshold voltage for cutting-off current with the second protection circuit 26 can be set higher than the first threshold voltage for cutting-off current with the first protection circuit 25. Since current can be cut-off with the second protection circuit even if for some reason the first protection circuit cannot cut-off current, the second protection circuit can function as a backup for the first protection circuit to increase battery pack safety to another level.

In the fifth battery pack of the present invention, the battery block 10 can be enclosed in a water-resistant bag 3 and housed inside the outer case 4. Since moisture ingress to the battery block can be prevented by the water-resistant bag even if water enters the outer case, battery pack safety can be increased to another level.

In the sixth battery pack of the present invention, the battery block 10 can be connected to an output connector 15 via lead-wires 8, and the lead-wires 8 can be routed through the open-end of the water-resistant bag 3 enclosing the battery block 10. Further, the lead-wires 8 can be disposed in approximately the center of the open-end of the water-resistant bag 3, and while forming a tight seal along the edges of the open-end, both sides of the lead-wire routing section can be folded to form L-shaped sealed regions SR. This can reliably form a tight seal in the lead-wire routing section of the water-resistant bag.

In the seventh battery pack of the present invention, the sealed regions SR can be configured to approximate a T-shaped region by combining the two L-shaped regions, and the straight-line top section of the T-shaped region can be positioned on the open-end-side of the water-resistant bag 3. This arrangement can avert moisture ingress through the open-end of the water-resistant bag with the straight-line section of the sealed regions.

In the eighth battery pack of the present invention, the lead-wire routing section disposed between the tightly sealed regions can be sealed-off with sealant 19. As a result, the lead-wire routing section of the water-resistant bag can be reliably closed-off in a sealed configuration.

In the ninth battery pack of the present invention, an air-vent 45 can be provided in the water-resistant bag 3, and the air-vent can be closed-off with a water-resistant patch 46, which is porous to air but not to moisture. As a result, even if gas is generated inside the water-resistant bag, it can be discharged to the outside through the air-vent to avoid inflation of the water-resistant bag. In addition, moisture ingress through the air-vent can be averted.

In the tenth battery pack of the present invention, the battery block 10 can be provided with a circuit board holder 7 to hold the first circuit board 6, and the water-resistant patch 46 can be disposed on the surface of the battery block 10 that is on the opposite side from the surface with the circuit board holder 7. As a result, even if a small amount of water vapor enters through the water-resistant patch, direct exposure of the first circuit board to water vapor can be averted and water-resistance can be maintained. The above and further objects of the present invention as well as the features thereof will become more apparent from the following detailed description to be made in conjunction with the accompanying drawings.

### BRIEF DESCRIPTION OF THE DRAWINGS

Fig. 1 is an oblique view showing the external appearance of a battery pack for an embodiment of the present invention;
Fig. 2 is an exploded oblique view of the battery pack in Fig. 1;
Fig. 3 is an exploded oblique view from behind the battery pack shown in Fig. 2;
Fig. 4 is an oblique view showing the battery block in Fig. 3;
Fig. 5 is an exploded oblique view of the battery block in Fig. 4;
Fig. 6 is an exploded oblique view of the battery holder in Fig. 5;
Fig. 7 is a vertical cross-section through the line VII-VII on the battery pack shown in Fig. 1;
Fig. 8 is an oblique view from below showing insertion of the battery block in Fig. 4 into the water-resistant bag;
Fig. 9 is an exploded oblique view showing disposition of the battery assembly in Fig. 8 for insertion in the outer case;
Fig. 10 is a plan view showing the sealing configuration of the water-resistant bag;
Fig. 11 is an oblique view showing folding of the water-resistant bag open-end region for the battery assembly in Fig. 10;
Fig. 12 is an oblique view showing the lead-wires folded into the recess for the battery assembly in Fig. 11; and
Fig. 13 is a block diagram showing the first protection circuit and the second protection circuit.

### DETAILED DESCRIPTION OF THE EMBODIMENT

The following describes an embodiment of the present invention based on the figures. However, the following embodiment is merely specific examples of a battery pack representative of the technology associated with the present invention, and the battery pack of the present invention is not limited to the embodiment described below. Further, components cited in the claims are in no way limited to the components in the embodiment. In particular, in the absence of specific annotation, structural component features described in the embodiment such as dimensions, raw material, shape, and relative position are simply for the purpose of explicative example and are in no way intended to limit the scope of the invention. Properties such as the size and spatial relation of components shown in the figures may be exaggerated for the purpose of clear explanation. In the descriptions following, components with the same name and label indicate components that are the same or have the same properties and their detailed description is appropriately abbreviated. Further, a single component can serve multiple functions and a plurality of structural elements of the invention can be implemented with the same component. In contrast, the functions of a single component can be divided among a plurality of components. In addition, explanations used to describe part of one embodiment can be used in other embodiments and descriptions.

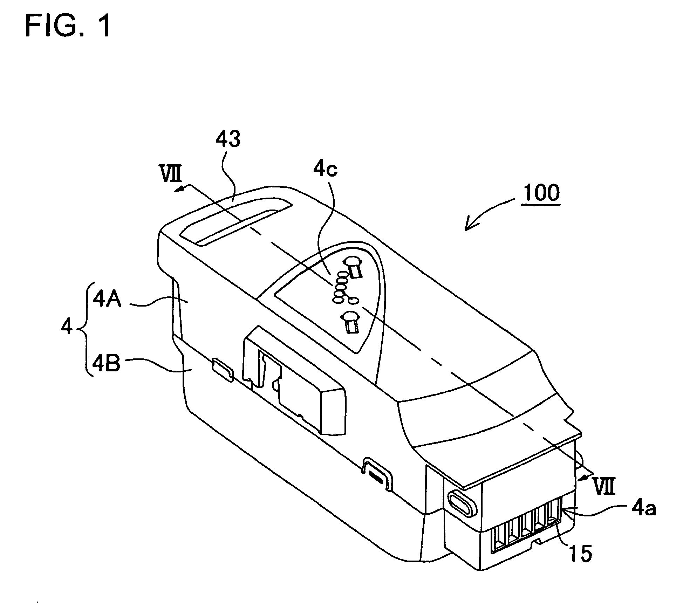

Figs. 1-13 show a battery pack for an embodiment of the present invention. As shown in Figs. 1-3, the battery pack 100 is provided with a battery assembly 50 that is a plurality of battery cells 1 connected as a battery block 10 and contained in a water-resistant bag 3, an output connector 15 with output terminals (not illustrated) connected via lead-wires 8 to the battery block 10 of the battery assembly 50, and an outer case 4 that holds the output connector 15 in a fixed position and houses the battery assembly 50 in a fixed position inside.

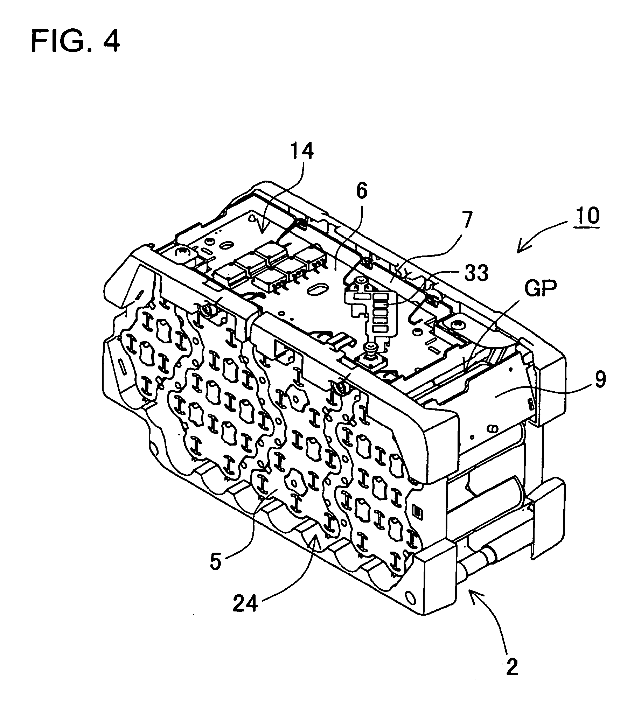

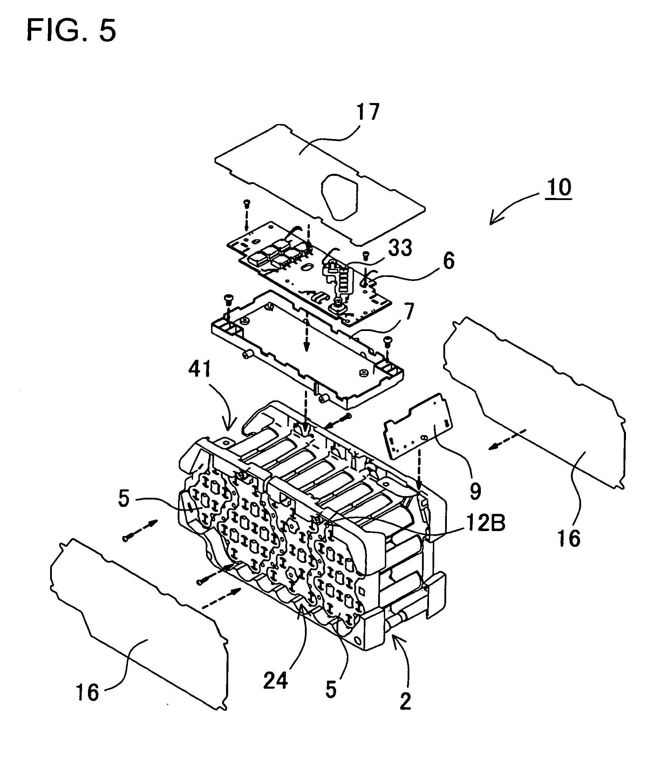

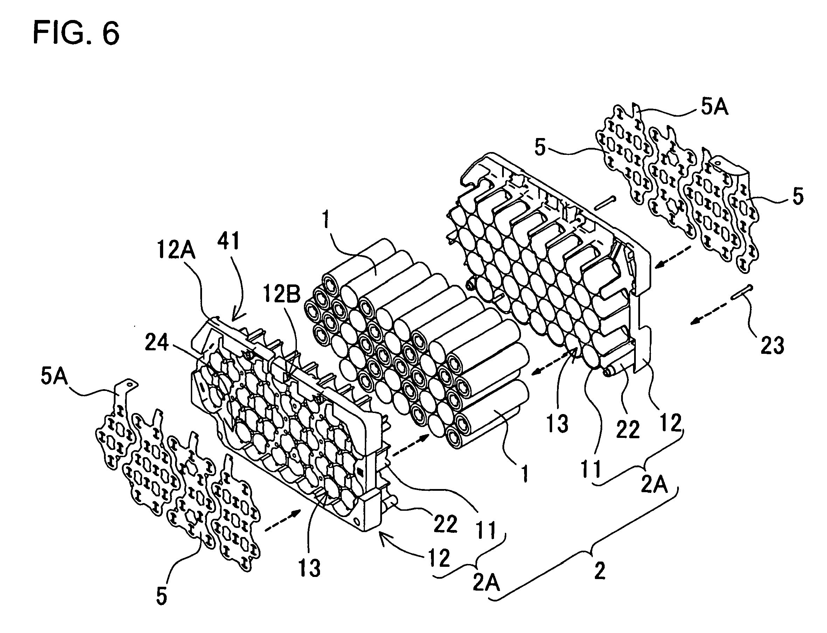

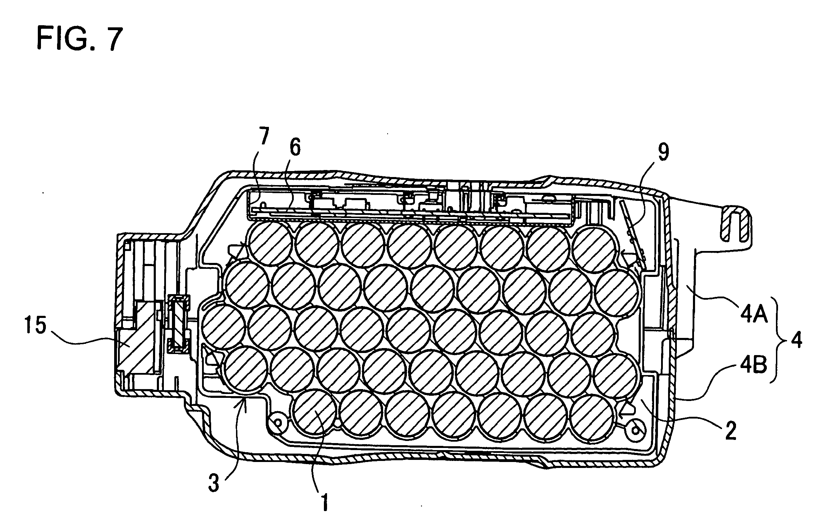

As shown in Figs. 4 and 5, the battery block 10 of the battery pack 100 in the figures is provided with a first circuit board 6 connected to the plurality of battery cells 1 via lead-plates 5, and a circuit board holder 7 that holds the first circuit board 6. As shown in Figs. 6 and 7, the battery block 10 retains the plurality of battery cells 1 in fixed positions with a battery holder 2.

### (Battery Cells 1)

The battery cells 1 are lithium ion rechargeable batteries. However, the batteries can also be nickel-hydride battery cells or nickelcadmium batteries. Although the battery pack 10 shown in Figs. 6 and 7 has circular cylindrical battery cells 1, rectangular batteries can also be used. The battery block 10 of the figures has battery cells 1 stacked with an orientation parallel to horizontal and with vertically adjacent circular cylindrical battery cells 1 offset laterally. This example has battery cells 1 stacked in five levels with a different number of battery cells in each level. The upper level has seven battery cells, the second through fourth levels have nine battery cells per level, and bottom level has seven battery cells. The battery cells 1 are retained in fixed positions in the battery holder 2 in a manner that positions the ends of the battery cells 1 in common vertical planes. The number of battery cell levels and the number of battery cells in each level is adjusted appropriate for the requisite specifications.

The ends of the plurality of battery cells 1 are weld-attached to the lead-plates 5 to connect the battery cells 1 in series and parallel. The battery block 10 in Fig. 6 has groups of six vertically disposed battery cells 1 connected in parallel with those seven groups again connected in series. Each lead-plate 5 of the battery block 10 is connected to the first circuit board 6 held in the circuit board holder 7 disposed in the circuit board mounting space 41 on the upper surface of the battery holder 2. As shown in Figs. 5 and 6, connecting tabs 5A are established protruding from the ends of the lead-plates 5 for connection to the first circuit board 6. The connecting tabs 5A are screwed onto lead-terminals or are soldered to lead-pins on the circuit board to connect the lead-plates 5 to the first circuit board 6.

### (Battery Holder 2)

As shown in Fig. 6, the battery holder 2 is formed in single-piece construction with the ends of retaining cylinders 11, which hold inserted battery cells 1, joined to supporting side-walls 12. The battery holder 2 has retaining cylinders 11 established on the inside of a pair of opposing supporting side-walls 12 to hold the battery cells 1. Battery cells 1 are inserted in the retaining cylinders 11 and held in fixed positions. The battery holder 2 is made of molded insulating material, which is a resin such as plastic. The retaining cylinders 11 are established by forming a plurality of insertion holes 13 for battery cell 1 insertion. The battery holder 2 holds a plurality of battery cells 1 in specified positions by loading the battery cells 1 in the retaining cylinder 11 insertion holes 13. Since the battery holder 2 of the figures holds forty two circular cylindrical battery cells 1, forty two insertion holes 13 are established in retaining cylinders 11. The forty two insertion holes 13 are arranged in five levels with eight, nine, nine, nine, and seven insertion holes 13 per level from the top level to the bottom. Further, the retaining cylinders 11 of the figures are arranged to dispose battery cells 1 in the valleys established between adjacent battery cells 1 and array the battery cells 1 in a plurality of levels as in a pile of logs.

The battery holder 2 shown in Fig. 6 is divided into two pieces midway along the axial direction of the retaining cylinders 11, and the two separated retaining cylinder 11 pieces are formed in single-piece construction with the two supporting side-walls 12. The battery holder 2 pieces are formed with ends of the retaining cylinders 12 joined to the inside of the supporting side-walls 12. Battery cells 1 are inserted in the insertion holes 13 that open from the retaining cylinders 12 at the central dividing surfaces, and the pair of pieces with supporting side-walls 12 is joined to hold a plurality of battery cells 1 in the battery holder 2.

As shown in Fig. 6, the retaining cylinders 11 have insertion holes 13 opened to form cylindrical shapes that essentially conform to the entire outline of the battery cells 1. However, it is not always necessary to form insertion holes that conform to the cylindrical shape of the battery cells around the entire perimeter of the battery cells. Further, open regions can be provided in part of the retaining cylinders 11, and temperature sensors can be disposed in the open regions. This battery pack 100 can control battery cell 1 charging and discharging while monitoring the temperature sensors for abnormal temperature. However, it is not always necessary to establish open regions in the retaining cylinders.

Although not illustrated, the retaining cylinders 11, which are centrally divided in the axial direction, are tapered to gradually reduce the inside diameter from the central dividing surfaces toward the supporting side-walls 12. The ends of these tapered retaining cylinders 11 that extend inside the supporting side-walls 12 make surface contact with battery cell 1 surfaces allowing the battery cells 1 to be retained in fixed positions. This type of structure that centrally divides the retaining cylinders 11 has the characteristic that mold design to form the plastic pieces is simplified and plastic molding can be easily executed.

The supporting side-walls 12 are positioned in parallel orientation at both ends of the retaining cylinders 11, which form the battery cell 1 holding region. The supporting side-walls 12 are formed in the shape of panels perpendicular to the retaining cylinders 11. As shown in Fig. 7, the supporting side-walls 12 have shapes that conform to the inside shape of the outer case 4. The pair of supporting side-walls 12 establishes a centrally located battery cell 1 holding region with the retaining cylinders 11, and establishes the circuit board mounting space 41 in a perimeter region. In the battery holder 2 shown in Fig. 5, the supporting side-walls 12 extend vertically from the ends of the retaining cylinders 11 and establish the circuit board mounting space 41 for the circuit board holder 7 between the pair of supporting side-walls 12. The width of the circuit board mounting space 41 is fixed by the length of the retaining cylinders 11, which is the battery cell 1 length, and the depth of the circuit board mounting space 41 is fixed by the height that the supporting side-walls 12 extend outward from the retaining cylinders 11. The depth of the circuit board mounting space 41, which is the amount the supporting side-walls 12 project vertically from the retaining cylinders 11, is set to a height that can hold the circuit board holder 7 in the circuit board mounting space 41 without contacting the circuit board holder 7 with the interior of the outer case 4.

The battery holder 2 also lead-plates 5 attached on the supporting side-walls 12 at both ends of the retaining cylinders 11. The lead-plates 5 are weld-attached to battery end-planes exposed outside the retaining cylinders 11 through insertion hole 13 openings. The supporting side-walls 12 of Figs. 4 and 5 have alignment cavities 24 established on their outside surfaces, and the lead-plates 5 fit into fixed positions in the alignment cavities 24. The shape of the alignment cavities 24 is slightly larger than the outline of the lead-plates 5, and the lead-plates 5 are inserted into and held in fixed positions inside the alignment cavities 24.

The supporting side-walls 12 have connecting windows 12B opened to connect lead-plate 5 connecting tabs 5A to the first circuit board 6. The connecting windows 12B are opened at the positions of the connecting tabs 5A on lead-plates 5 disposed in the alignment cavities 24 and enable connecting tab 5A access into the circuit board mounting space 41. Lead-plate 5 connecting tabs 5A are disposed in the connecting windows 12B and connected to the first circuit board 6 in the circuit board holder 7 disposed in the circuit board mounting space 41. Since lead-plate 5 connecting tabs 5A are disposed in supporting side-wall 12 connecting windows 12B, this battery pack 100 has the characteristic that when the battery block 10 is enclosed by the water-resistant bag 3, damage to the water-resistant bag 3 caused by the lead-plate 5 connecting tabs 5A can be effectively prevented. This is because lead-plate 5 connecting tabs 5A disposed in the connecting windows 12B are protected by contact-plate sections 12A of the supporting side-walls 12 that prevent the connecting tabs 5A from directly contacting the water-resistant bag 3. Consequently, this structure can effectively prevent lead-plate 5 connecting tabs 5A from locally piercing the inside and damaging the water-resistant bag 3.

### (Insulating Sheets 16)

As shown in figures such as Fig. 5, the surfaces of the lead-plates 5 are covered by insulating sheets 16. The insulating sheets 16 are made of sheet material with superior insulating properties such as plastic or paper. By covering lead-plates 5 exposed from the sides of the battery holder 2 with insulating sheets 16, unintended short circuits can be avoided. Note the battery block in Fig. 4 is shown with the insulating sheets removed for the purpose of explanation.

As shown in Fig. 6, holder units 2A are formed as single-pieces with each holder unit 2A having a supporting side-wall 12 and retaining cylinders 11. A pair of holder units 2A are joined together to make the battery holder 2. The holder units 2A are connected together by screwing set screws 23 into bosses 22 formed in single-piece construction with the holder units 2A. The holder units 2A of Fig. 6 have bosses 22 formed in single-piece construction at both ends and in a lower central region of the holder units 2A. The bosses 22 have cylindrical shapes with set screws 23 inserted inside. Although not illustrated, the separate holder units can also be joined in a snap-together configuration, can be joined with adhesive bond, or can be joined by a combination of these methods.

Although the battery holder 2 has a supporting side-wall 12 and retaining cylinder 11 halves formed as a single-piece holder unit 2A, the battery pack of the present invention is not limited to that battery holder structure. The battery holder can be any structure that can retain a plurality of batteries in fixed positions. For example, the battery holder can be a single-piece structure rather than dividing the retaining cylinders and connected supporting side-walls, or it can be configured as a separate retaining cylinder piece with supporting side-wall pieces that connect at both ends.

A battery block 10 that holds a plurality of battery cells 1 in fixed positions in a battery holder 2 as described above has the characteristic that battery block 10 assembly is simple and can be easily performed. It has the additional characteristic that the battery block 10 holding a plurality of battery cells 1 in fixed positions can be smoothly enclosed in the water-resistant bag 3.

### (First Circuit Board 6)

The battery block 10 of the figures has a circuit board holder 7 disposed in the circuit board mounting space 41 established in the battery holder 2, and the first circuit board 6 is mounted in that circuit board holder 7. The circuit board holder 7 retains the first circuit board 6 in a designated position. By surrounding the outside of the first circuit board 6 with the circuit board holder 7, the first circuit board 6 can be protected against external stresses on its perimeter. The first circuit board 6 carries control circuitry to control battery cell 1 charging and discharging, and carries the first protection circuit 25 to protect the battery cells 1. As shown in figures such as Fig. 5, the first circuit board 6 is connected to the battery cells 1 via the lead-plates 5.

### (First Protection Circuit 25)

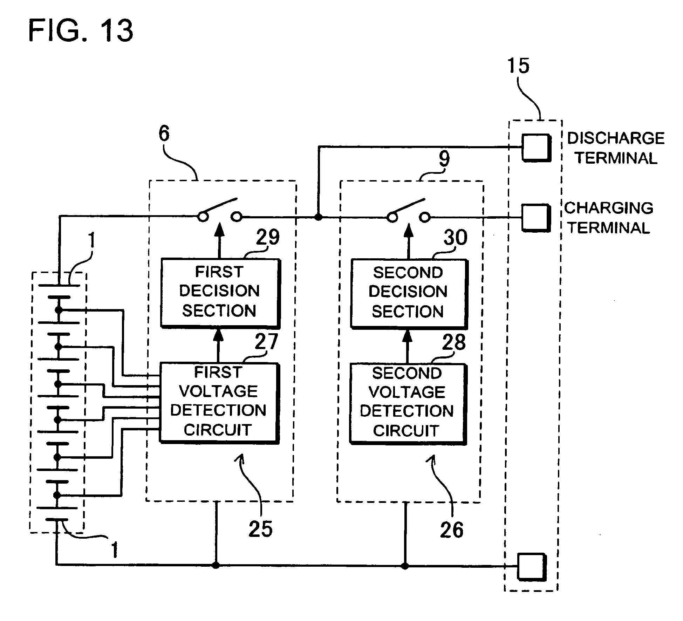

Turning to Fig. 13, a block diagram of the first protection circuit 25 and the second protection circuit 26 is shown. As shown in this figure, the first protection circuit 25 is mounted on the first circuit board 6 and the second protection circuit 26 is mounted on the second circuit board 9. The first protection circuit 25 detects the voltage of each battery cell 1 with a first voltage detection circuit 27 and is provided with a first decision section 29 that cuts-off charging and discharging current. The first decision section 29 switches OFF a switching device to cut-off discharge current when the voltage of any battery cell 1 drops below a given minimum voltage. Further, if the voltage of any battery cell 1 exceeds a first threshold voltage, a first switching device is switched OFF to stop battery charging. This type of battery pack 100 with a first protection circuit 25, which detects the voltage of each battery cell with a first voltage detection circuit 27 and controls charging and discharging, can protect the battery cells 1 while allowing operation in a safe manner.

Further, the first circuit board 6 carries circuitry to detect abnormal battery temperature. For example, the battery pack 100 can be provided with temperature sensors to detect temperature abnormality in the battery cells 1 held in the battery holder 2 retaining cylinders 11. The first circuit board 6 temperature detection circuitry detects abnormal battery cell 1 temperature via the temperature sensors, and the first protection circuit 25 performs control operations to stop charging and discharging.

Further, the first circuit board 6 has light-emitting diodes (LEDs) 33 attached. The first circuit board 6 of the figures has a plurality of LEDs 33 mounted in a row. The LEDs 33 indicate battery parameters such as remaining battery capacity, battery charging status, and/or battery full-charge by illumination conditions such as the number of LEDs illuminated or the color of the illumination. A control circuit to control LED 33 illumination conditions is mounted on the first circuit board 6. The control circuit integrates battery charging and discharging current to compute remaining capacity, detects charging status from the battery charging current, and/or determines battery full-charge from the battery voltage to control LED 33 illumination conditions. Light from the LEDs 33 passes through the transparent water-resistant bag 3 and shines outside through windows 4c established in the outer case 4.

In the battery pack 100 shown in Fig. 4, the first circuit board 6 is embedded in insulating potting resin 14. This has the characteristic that the first circuit board 6 can be protected by the potting resin, and by embedding electrical components mounted on the first circuit board 6 in potting resin, the first circuit board 6 can be enclosed in the water-resistant bag 3 without electrical components protruding from its surface. Consequently, this also achieves the characteristic that damage to the water-resistant bag 3, which is made of flexible sheet material, due to contact with first circuit board 6 topology can be effectively prevented. Further, a configuration that embeds the first circuit board 6 in insulating potting resin 14 and encloses the battery block 10 inside a water-resistant bag 3 as a battery assembly 50 can protect the first circuit board 6 from moisture ingress with both the water-resistant bag 3 and the potting resin. Therefore, it has the characteristic that first circuit board 6 failure can be reduced to the extreme and charging and discharging can be performed over a long period while protecting the battery cells 1 with the first circuit board 6.

### (Output Connector 15)

Lead-wires 8 are run-out from the first circuit board 6. The ends of the lead-wires 8 are connected to an output connector 15 that connects with external equipment. Although not illustrated, lead-wires for communication purposes can also be run-out from the first circuit board and connected to the output connector. The output connector 15 is provided with output terminals (not illustrated) for delivering power from the internal battery cells 1 and connecting terminals for the external equipment. The output connector 15 is mounted in the outer case 4 in a manner that exposes the output terminals and connecting terminals from a window 4a established in the outer case 4. Note the lead-wire 8 for discharging power output is connected to the output connector 15 through a fuse 18.

Preferably, the upper surface of the first circuit board 6 is also covered with an insulating sheet 17. In the example of Fig. 5, the insulating sheet 17 is formed with a cut-out region to expose the LEDs 33.

### (Second Circuit Board 9)

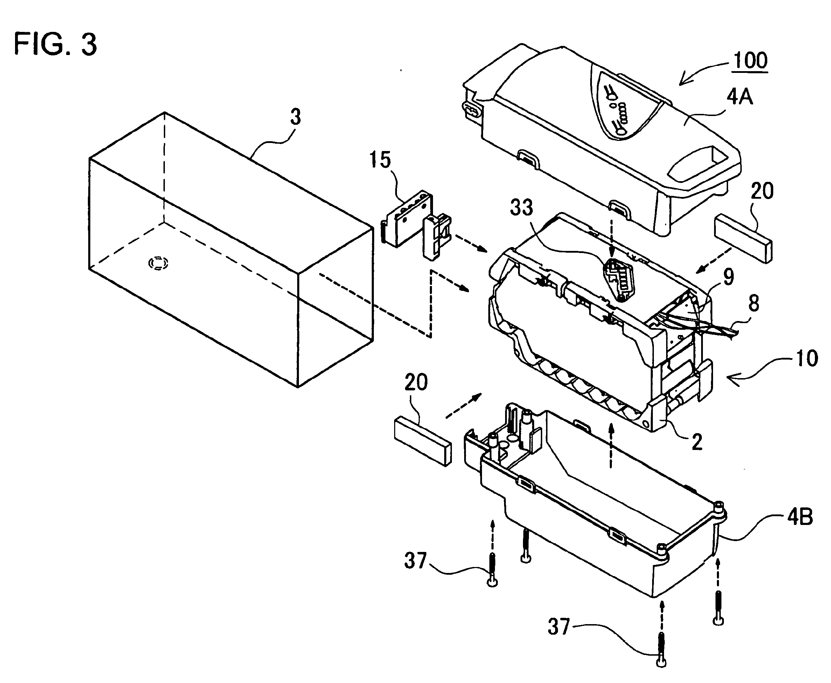

In addition to the first circuit board 6, the battery pack 100 shown in Figs. 3-5 is provided with a second circuit board 9. As shown in Fig. 13, the second protection circuit 26 is mounted on the second circuit board 9. The second protection circuit 26 detects battery cell 1 voltage with a second voltage detection circuit 28, detects values exceeding a given threshold with a second decision section 30, and cuts-off current when an abnormality is detected to protect the battery cells 1 from over-charging and over-discharging in the same manner as the first protection circuit 25 but independently from the first protection circuit 25. Accordingly, the second protection circuit 26 is provided with a second switching device for cutting-off current. Since the second protection circuit 26 operates independently from the first protection circuit 25, the second protection circuit 26 can separately cut-off current by switching the second switching device OFF even if some type of malfunction occurs in the first protection circuit 25 and it becomes inoperable. Note the example in Fig. 13 illustrates protection circuit operation during charging.

Since the second circuit board 9 will become large if protection circuit structure identical to the first protection circuit 25 is adopted, it is desirable to simplify the circuit structure. For example, sensor systems can be curtailed by using sensors common to the first protection circuit for measuring the voltage and temperature of each battery cell. Or, circuit board component count can be reduced by only monitoring overall battery block voltage or only monitoring representative battery cells instead of every battery cell. In this manner, the second circuit board 6 can be made smaller than the first circuit board 9.

Preferably, the second circuit board 9 is disposed with separation from the first circuit board 6. By mounting protection circuitry on physically separate circuit boards, even if failure occurs in one of the circuit boards, the battery pack can be protected as long as the other circuit board is functional. Meanwhile, if physical impact damages the protection circuitry, it is conceivable that both protection circuits can simultaneously become inoperable. In this case as well, it can be anticipated that separation of the circuit boards implementing the protection circuits will reduce or avoid propagation of mechanical stress and damage imposed on one circuit board to the other circuit board, and this can contribute to improved reliability. In the example of Fig. 4, a gap GP is established between the first circuit board 6 and the second circuit board 9.

The second circuit board 9 is different than the first circuit board 6 in that it is mounted directly on the battery holder 2 without using an intervening circuit board holder. In the present example, the second circuit board 9 is held sandwiched between the two separate pieces of the battery holder 2. By not using a circuit board holder, the second circuit board 9 structure can be slim and easily placed inside the outer case 4. In particular, since the second circuit board 9 is miniaturized compared to the first circuit board 6, it can be disposed in a comparatively accommodating manner.

In the example shown in figures such as Figs. 4, 5, and 7, the second circuit board 9 is disposed in a corner region inside the outer case 4. Since this region is essentially unused space, using it to dispose the second circuit board 9 has the advantage that a second protection circuit 26 can be added without increasing the outline of the battery pack. Further, by positioning the second circuit board 9 in the corner region in an obliquely inclined orientation, space is established between the second circuit board 9 and the corner of the outer case 4. Consequently, even in the event of damage to the corner of the outer case 4, the probability of corner region damage extending to the second circuit board 9 can be reduced. The probability of damaging a relatively prominent corner region of the rectangular outer case 4 by impact with some object or by dropping the outer case 4 on the ground is comparatively high. However, intentionally restraining damage to the corner regions can have the effect of absorbing an impact and mitigating damage. Accordingly, even if a corner region is damaged, the probability of avoiding damage to the obliquely oriented second circuit board 9 can be high. By disposing the second circuit board 9, which is added as a backup for the first circuit board 6, in a region with a high probability of avoiding damage, a high-reliability protection circuit appropriate for use as a backup can be realized.

### (Second Protection Circuit 26)

The second protection circuit 26 mounted on the second circuit board 9 is preferably set to activate during charging at a second threshold voltage that is higher than the first threshold voltage for activating the first protection circuit 25. Specifically, if the second protection circuit 26 is set to the same threshold voltage as the first protection circuit 25, undesirable interference between operation of the two circuits can result. In contrast, by setting the second threshold voltage higher than the first threshold voltage, even if the first protection circuit 25 fails to activate at the first threshold voltage, the second protection circuit 26 can halt operation when voltage rises to the second threshold voltage. This arrangement functions as redundant protection circuitry.

As described above, a plurality of battery cells 1 is held in fixed positions in the battery holder 2, lead-plates 5 attached to the end-planes of each battery cell 1 are connected to the first circuit board 6, and the circuit board holder 7 holding the first circuit board 6 is mounted in the battery holder 2 to form the battery block 10. The battery block 10 is then enclosed in a water-resistant bag 3 to form the battery assembly 50, and the battery assembly 50 is housed inside the external case 4.

### (Water-Resistant Bag 3)

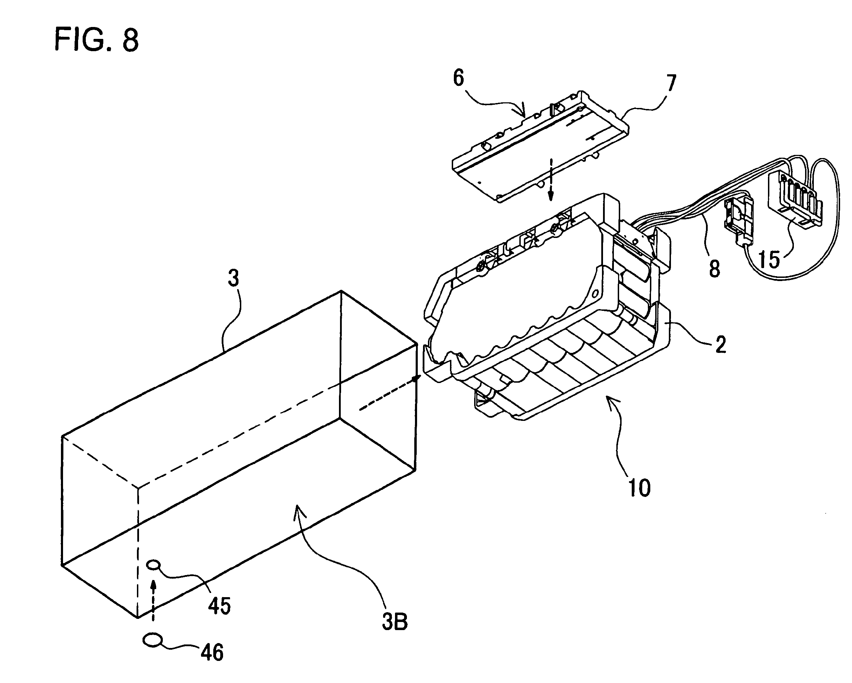

As shown in Fig. 8, the water-resistant bag 3 is flexible sheet material formed in the shape of a bag. Plastic sheet can be used as the water-resistant bag 3 flexible sheet material. Materials such as polyimide (PI), polyetherimide (PEI), or polyethylene-telephthalate (PET) can be used as the plastic sheet. These plastic sheet materials have superior flexibility and heat resistant characteristics. Further, these materials will not chemically react or dissolve with electrolyte contact in the event that a battery cell 1 safety valve opens and discharges electrolyte. However, other plastic sheet materials can also be used as the flexible sheet material. In the present example, a three-layer film structure of nylon, PET, and polypropylene is used to resist damage due to vibration and dropping impact. This structure produces a water-resistant bag with superior mechanical strength.

The water-resistant bag 3 is preferably made of transparent flexible sheet material. This water-resistant bag 3 can transmit light from the LEDs 33 mounted on the first circuit board 6 allowing illumination to be displayed through the indicator windows 4c of the outer case 4. Further, a transparent water-resistant bag 3 also allows visual confirmation of internal conditions from the outside. For example, absence of conditions such as lead-wire entanglement can be confirmed during assembly making it advantageous from a reliability standpoint.

The water-resistant bag 3 shown in Fig. 8 has a sack-shape that contains the battery block 10, is provided with a containing region 3B inside, and has an open-end to run the lead-wires 8 out. The containing region 3B holds the battery block 10 and the lead-wires 8 are run-out through the open-end of the water-resistant bag 3 from the battery block 10 to the outside. The containing region 3B of the water-resistant bag 3 is formed with a size and shape that can contain the battery block 10. The water-resistant bag 3 has a sack-shape that conforms to the outline of the enclosed battery block 10 such as a rectangular solid shape or rectangular cylindrical shape slightly larger than the outline of the battery block 10 to allow battery block 10 insertion without forcing. However, the water-resistant bag can also have a circular or elliptical cylindrical shape.

### (Lead-Wire Routing Section 3Y)

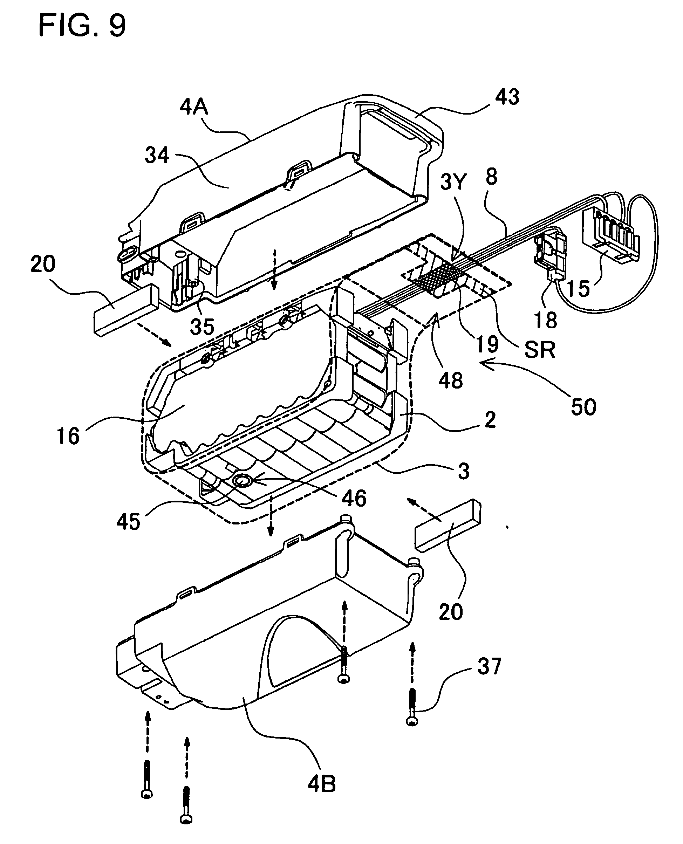

As shown in Figs. 8 and 9, the water-resistant bag 3 has a sack-shape that encloses the battery block 10 inside the containing region 3B, and has a lead-wire routing section 3Y, which is the region where lead-wires 8 are run-out through the open-end of the water-resistant bag 3. The water-resistant bag 3 of the figures has a straight-cylinder shape with the open-end made the same cross-sectional size as the containing region 3B. This type of water-resistant bag 3 can be efficiently and inexpensively manufactured in quantity by inflation extrusion molding cylinder-shaped plastic cut to a prescribed length. Flexible sheet molded in a cylinder-shape is fused together or adhesively bonded at one end leaving the other end open to form the water-resistant bag 3 shown in the figures. The battery block 10 is inserted into the containing region 3B of the water-resistant bag 3, lead-wires 8 are run-out from the open-end, and the open-end region is partially heat-sealed to form the lead-wire routing section 3Y.

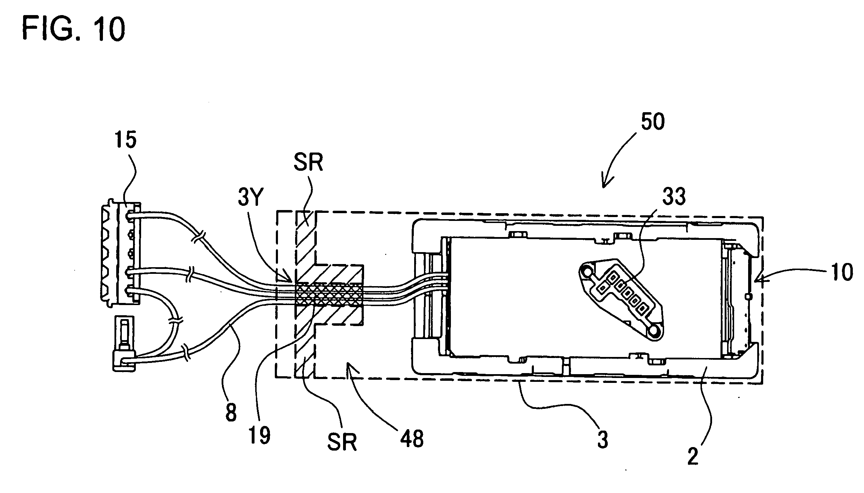

As described above, the battery block 10 is connected to the output connector 15 via lead-wires 8. Consequently, it is necessary to run the lead-wires 8 out the open-end of the water-resistant bag 3 enclosing the battery block 10. To seal the water-resistant bag 3 in a water-resistant manner while running the lead-wires 8 out the open-end, the sealing configuration shown in Fig. 10 is adopted. Specifically, with the lead-wires 8 disposed approximately in the center of the open-end of the water-resistant bag 3, a tight seal is formed by thermally fusing together (heat-sealing) the edges along the open-end of the water-resistant bag 3. At this time, instead of heat-sealing the central region disposing the lead-wires 8, L-shaped sealed regions SR are formed by heat-sealing along the routing direction of the lead-wires 8 from the edges of the open-end. Specifically, L-shaped sealed regions SR are formed on both sides of the lead-wires. Accordingly, the lead-wire routing section 3Y can be formed along the direction of the lead-wires 8, and the effectiveness of the tight seal can be improved while confining the lead-wires 8 without developing wire position shift or entanglement.

Combining the two L-shaped regions of the sealed regions SR described above, an approximately T-shaped region is formed, and the straight-line top section of the T-shaped region is positioned on the open-end-side of the water-resistant bag 3. This arrangement can avert moisture ingress through the open-end of the water-resistant bag with the straight-line section of the sealed regions SR described above. Further, a gap between the lead-wires 8 and the water-resistant bag 3 is located at the center of the top of the straight-line section of the T-shaped region, and this has the advantage that the tip of a nozzle to inject sealant 19 can be easily inserted in that gap.

Note the sealed regions SR are not limited to L-shaped regions and can have a band-shape instead. Further, the sealed regions SR can also be formed by methods such as applying adhesive bond or pre-coating the edges of the open-end with adhesive to form a seal instead of heat-sealing the open-end. Further, the water-resistant bag 3 open-end can be an extension piece, and the lead-wire routing section can be formed by disposing the lead-wires 8 inside the extension piece while heat-sealing the extension piece. This structure has the advantage that an extension piece with some thickness can form the lead-wire routing section while guiding the lead-wires 8 from both sides to stably retain the lead-wires 8.

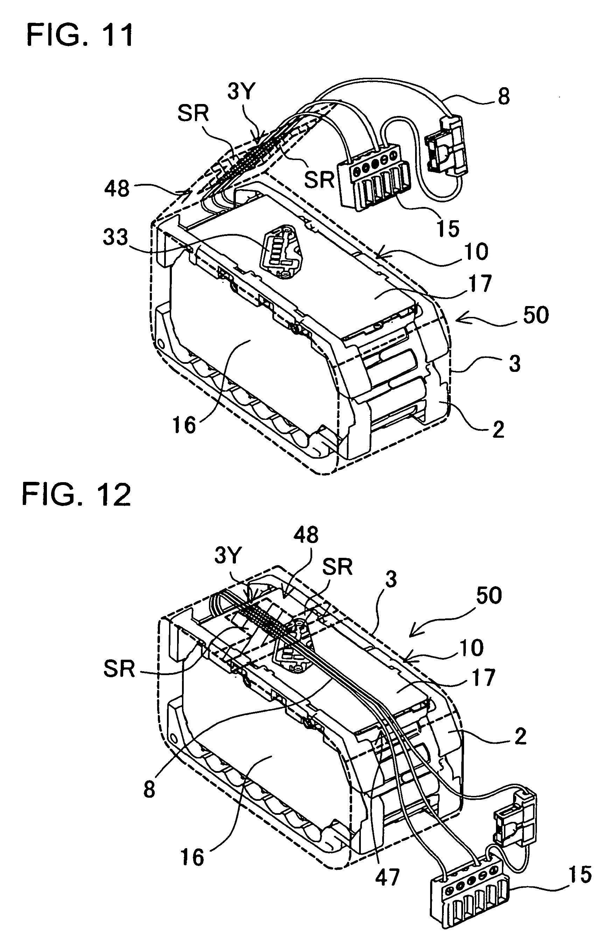

As shown in Fig. 11, after heat-sealing the water-resistant bag 3 in the manner described above, the end of the water-resistant bag 3 can be folded over as a folded region 48. As shown in Fig. 12, the folded region 48 and lead-wires 8 are inserted in a cavity 47 at the center of the end of the battery holder 2 to hold them stably in the folded position. Depending on requirements, the folded region 48 and lead-wires 8 can be held in place with fastening material such as tape. This configuration can prevent folded region 48 and lead-wire 8 position shift due to vibration and impact forces and maintain a stable sealed condition. Further, as shown in Fig. 3, resilient cushion material 20 can be adhered to the battery assembly 50 to buffer and absorb vibration and impact forces and protect the battery assembly 50 after insertion in the outer case 4.

The water-resistant bag 3 is sealed in a water-tight manner by injecting sealant 19 into the gap between the lead-wires 8 and the water-resistant bag 3 in the lead-wire routing section, which is sandwiched between the sealed regions. When sealant 19 is injected, it is delivered from the tip of a nozzle into the gap. As described previously, the gap between the lead-wires 8 and the water-resistant bag 3 is located at the center of the straight-line top section of the T-shaped region formed by the combination of the two L-shaped sealed regions SR. Consequently, a nozzle can be easily inserted into the gap to inject the sealant 19. In this battery pack 100, since the battery block 10 with the first circuit board 6 connected to the battery cells 1 is contained in the water-resistant bag 3 in a water-tight structure as the battery assembly 50, the first circuit board 6 and the battery cells 1 are housed together in a water-tight structure inside the outer case 4. In particular, the battery cells 1 and first circuit board 6 as well as all the connections between the battery cells 1 and the first circuit board 6 are included in the battery block 10 enclosed in the water-resistant bag 3 as the battery assembly 50. Therefore, compared to prior-art battery packs that house the battery block in an inner case, both the battery cells 1 and first circuit board 6 can be housed in an ideal water-tight structure inside the outer case 4. Since this configuration encloses battery cell 1 and first circuit board 6 connecting regions inside the water-resistant bag 3, extra processing steps to achieve a water-tight structure such as coating the connecting regions with sealant are unnecessary. Further, degradation of the extra sealant, which compromises water-resistance, does not occur in the present invention. A battery pack 100 configuration that only runs lead-wires 8 out of a water-resistant bag 3 has an extremely simple structure. Accordingly, only the lead-wires 8 made water-tight with sealant 19 are run-out through the open-end of the water-resistant bag 3, and the lead-wire 8 routing section can be reliably sealed in a water-tight structure. This allows the battery cells 1 and first circuit board 6 to be made water-tight in entirety and housed in the outer case 4. Materials such as silicone resin can be used as the sealant 19. By using heat-sealing and sealant 19 at the open-end of the water-resistant bag 3, the lead-wire routing section can be reliably closed-off in a tightly sealed configuration. Further, by sealing the water-resistant bag 3 closed with the open-end in a folded condition, there are no post-sealing condition changes and the sealed state can be stably maintained.

The open-end of the water-resistant bag 3 is heat-sealed to form the lead-wire routing section 3Y, and the lead-wire routing section 3Y is folded over and stored in battery holder 2 routing space. In addition, the outside of the water-resistant bag enclosing the battery block 10 with lead-wires 8 extending out can be covered with shrink-tube or tape. Further, the narrowly confined lead-wire routing section 3Y of the water-resistant bag 3 can be formed with banding material or a wiring sleeve instead of heat-sealing, and sealant 19 can be injected in the gap between the lead-wires 8 and the water-resistant bag 3 to enclose the battery block 10 in a water-tight configuration.

It is also preferable to discharge air inside the water-resistant bag 3 prior to sealing-off the lead-wire routing section 3Y by injecting sealant 19. This is because a water-resistant bag 3 filled with air is inflated like a balloon increasing the volume and not only making it difficult to insert in the outer case, but also making it easy to damage the flexible sheet material during insertion or when the outer case is impacted. Accordingly, when air is discharged to deflate the water-resistant bag 3, bag volume is reduced making it easy to insert in the outer case 4. This affords extreme reduction in water-resistant bag 3 damage during outer case 4 insertion or due to impact.

The lead-wire routing section 3Y of the water-resistant bag 3 can be closed, and the water-resistant bag 3 can be pressed from the outside to increase the pressure inside and discharge air from the closed section. Or, the water-resistant bag 3 can be closed-off with sealant 19 in a water-tight structure while sucking air from the lead-wire routing section 3Y to reduce the pressure inside. A water-resistant bag 3 with reduced internal pressure has the characteristic that the inside of the flexible sheet material tightly adheres to outer surfaces of the battery holder 2 supporting side-walls 12. This makes the overall battery assembly 50 compact allowing easy insertion in the outer case 4. For example, air inside the water-resistant bag 3 can be discharged to reduce the internal pressure causing the inside of the water-resistant bag to tightly adhere to the surface of the battery block 10. Air can be sucked from the inside of the water-resistant bag 3 and the internal pressure can be reduced by inserting a suction nozzle in the bag opening. After removing air from the inside of the water-resistant bag 3, sealant 19 such as silicone resin can be introduced into the lead-wire routing section 3Y to close it off in a water-tight manner. Since a water-resistant bag 3 with the flexible sheet material tightly adhered to the battery block 10 surface can effectively avoid flexible sheet bulkiness, the battery assembly 50 can be smoothly inserted into the battery holding section of the outer case 4.

The water-resistant bag 3 with air removed from inside can be inserted in the outer case 4, or it can be inserted in the first case 4A (described later), air inside can be discharged, and subsequently the case can be closed with the second case 4B. Since removing the air inside can make the outline of the water-resistant bag 3 conform to the outline of the battery block 10 and the compact battery assembly 50 can easily be inserted in the outer case 4, damage to the water-resistant bag 3 during insertion or impact can be effectively prevented in this battery pack 100.

Although not illustrated, the outside of the water-resistant bag enclosing the battery block can also be covered with shrink-tube. Covering the outside of the water-resistant bag with shrink-tube can effectively cover perimeter regions of the supporting side-walls 12, which are the surfaces in contact with the inside of the outer case 4. Heat-shrink tubing or rubber-like resilient material can be used as the shrink-tube. Sheet material made from polyvinyl chloride or polyolefin system materials formed in ring or cylinder shapes can be used as heat-shrink tubing. Noncombustible silicone can be used as rubber-like resilient material. These types of shrink-tubes are made with a size and shape that, in the shrunk state can cover the perimeter of the battery block supporting side-walls 12 enclosed in the water-resistant bag.

Further, although not illustrated, adhesive tape can also be attached to the outside of the water-resistant bag enclosing the battery block to make the water-resistant bag conform to the surface of the battery block. For example, polypropylene tape can be used as the adhesive tape. Adhesive tape can be attached to the planar and curved surfaces of the supporting side-wall perimeter regions, which are the surfaces that contact the inside of the outer case 4. A battery pack configuration with adhesive tape attached in this manner can effectively cover the surfaces of the battery assembly 50 that make contact with the inside of the outer case 4.

As shown in Fig. 8, an air-vent 45 can be established in the water-resistant bag 3. In addition, the air-vent 45 can be closed-off with water-resistant patch 46. The water-resistant patch 46 can be material that passes air but blocks moisture such as GORE-TEX® (trade-name) with adhesive bond applied to one side allowing it to be attached in a patch-form. By establishing an air-vent 45, even if gas is generated inside the water-resistant bag 3, it can be discharged to the outside through the air-vent 45. In particular, if the pressure inside the external case of a battery cell 1 rises due to over-charging or over-discharging and the safety valve opens to release the gas inside, it is possible for the water-resistant bag 3 to inflate if it is tightly sealed. Accordingly, by establishing an air-vent 45, water-resistant bag 3 expansion can be avoided, and by providing a water-resistant patch 46, moisture ingress through the air-vent 45 can be prevented. Namely, by sealing the water-resistant bag 3 in a manner impermeable to moisture but not to air, both battery cell protection with a water-tight structure and tolerance of battery cell gas release with gas permeability can be realized in a compatible manner.

As shown in Figs. 8 and 9, the air-vent 45 is preferably disposed on the side of the battery block 10 opposite the surface holding the first circuit board 6. Specifically, when the battery block 10 is inserted in the water-resistant bag 3, the position of the air-vent 45 is adjusted to be on the opposite side of the battery block 10 from the circuit board holder 7. With this arrangement, even if a small amount of water vapor enters through the water-resistant patch 46, direct exposure of the first circuit board 6 to that water vapor is avoided to maintain water-resistance. However, the water-resistant patch can also be disposed on the first circuit board side or on a different side.

As described above, a configuration that covers the outside of the water-resistant bag 3 with shrink-tube or adhesive tape puts the flexible sheet material water-resistant bag in close contact with the perimeter surfaces of the battery block. This has the characteristic that water-resistant bag bulkiness can be effectively avoided, the water-resistant bag can be easily loaded in the outer case 4, and assembly can be performed efficiently. Further, since shrink-tube or adhesive tape covers outer surfaces of the water-resistant bag that contact inside surfaces of the outer case 4, damage to the water-resistant bag flexible sheet material sandwiched between the battery block and the outer case 4 can be effectively prevented.

### (Outer Case 4)

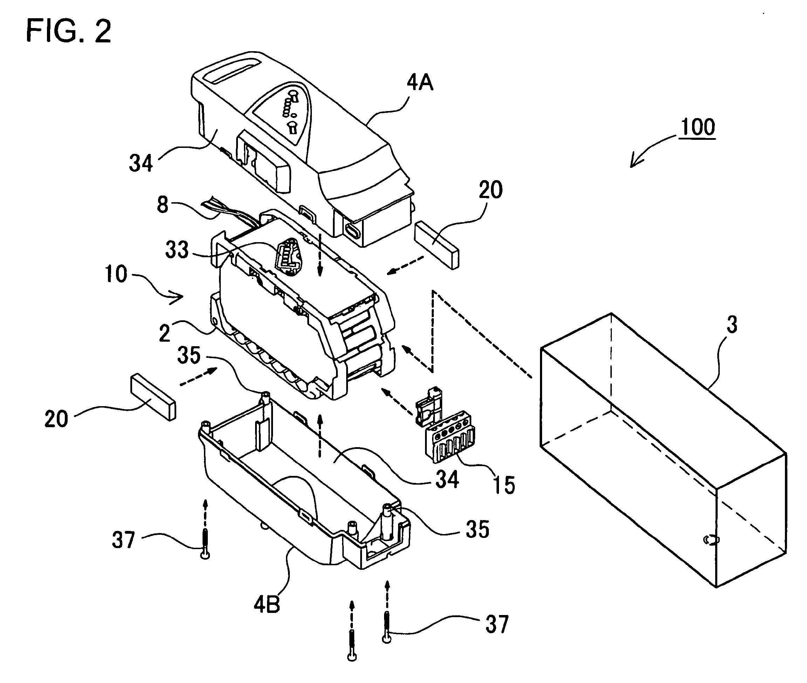

The battery assembly 50 prepared in this manner is loaded in the outer case 4. In the example of Figs. 2, 3, and 9, the outer case 4 is divided into a first case 4A and a second case 4B. This two-piece outer case 4 is made of material with superior insulating properties such as plastic. A handle 43 convenient for carrying the battery pack is provided at one end, and the output connector 15 for connection to the equipment being powered, which is a bicycle with electrical-assist, is provided at the other end. The first case 4A and the second case 4B are formed in single-piece construction with perimeter side-walls 34. Further, locking projections and locking slots are formed at two locations on the perimeter side-walls 34, and the locking projections established on one outer case piece interlock with the locking slots established on the other outer case piece to join the two outer case pieces.

In addition, set screws 37 are screwed in at four locations to join the outer case 4 pieces. Specifically, bosses 35 are provided at the four corner regions on the inside surfaces of the first case 4A and the second case 4B. Set screws 37 are inserted in the bosses 35 to connect the first case 4A and the second case 4B. The edges of perimeter side-walls 34 around the open regions of the first case 4A and the second case 4B make mutual contact without gaps to close-off the outer case 4.

The outer case 4 is provided with a window 4a to expose the output connector 15 through a connecting perimeter side-wall 34A where the output connector 15 is connected. During assembly, the battery assembly 50 is inserted into the first case 4A and the output connector 15 is temporarily attached. Then with the battery assembly 50 and output connector 15 set in position in the first case 4A, the second case 4A is connected. When the second case 4B is connected to the first case 4A, the output connector 15 is positioned in the window 4a of the second case 4B disposing it in a fixed position in the outer case 4. Specifically, when the first case 4A and the second case 4B are joined, the output connector 15 fits in the second case 4B window 4a and is held tight in a fixed position.

The outer case 4 with the first case 4A and the second case 4B joined in this manner houses the battery assembly 50, which is the battery block 10 enclosed inside the water-resistant bag 3. The battery assembly 50 has lead-wires 8 run-out through the water-resistant bag 3 lead-wire routing section 3Y in a tightly sealed water-tight configuration that prevents moisture ingress into the battery block 10 enclosed inside. Further, this water-resistant bag-enclosed water-tight structure has the characteristic that electrolyte discharged from an opened battery cell 1 safety valve can be effectively prevented from leaking outside the water-resistant bag 3.

### INDUSTRIAL APPLICABILITY

The battery pack of the present invention can be appropriately used as a power source in a bicycle with electrical-assist or other electric powered bicycle, an electric motor-bike (such as an electric scooter or electric motorcycle), and electric power tools. It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

## Claims

1. A battery pack comprising:
a battery block (10) having a plurality of battery cells (1) housed in a battery holder (2);
a first circuit board (6) mounted on the battery holder (2) of the battery block (10) to carry a first protection circuit (25) that can detect battery cell (1) abnormality and cut-off current flow;
a second circuit board (9) to carry a second protection circuit (26) that is a separate structure from the first protection circuit (25) and is capable of detecting battery cell (1) abnormality and cutting-off current flow independently from the first protection circuit (25);
an outer case (4) to house the battery block (10); and
an output connector (15) established on the outside the outer case (4) to deliver battery block (10) output to the outside,
**characterized in that**:
the second circuit board (9) is smaller than the first circuit board (6) and is disposed inside the outer case (4) physically separated from the first circuit board (6).

2. The battery pack as cited in claim 1 wherein the second circuit board (9) is retained in a corner region of the outer case (4) in an orientation inclined with respect to the first circuit board (6).

3. The battery pack as cited in claim 2 wherein the second circuit board (9) is mounted on the battery holder (2) of the battery block (10) to retain it in an inclined orientation in a corner region of the outer case (4).

4. The battery pack as cited in any one of the claims 1-3 wherein the second threshold voltage for cutting-off current with the second protection circuit (26) is set higher than the first threshold voltage for cutting-off current with the first protection circuit (25).

5. The battery pack as cited in any one of the claims 1-4 wherein the battery block (10) is enclosed in a water-resistant bag (3) and housed inside the outer case (4).

6. The battery pack as cited in claim 5 wherein the battery block (10) is connected to an output connector (15) via lead-wires (8),
wherein the lead-wires (8) are routed through the open-end of the water-resistant bag (3) enclosing the battery block (10), and
wherein the lead-wires (8) are disposed in approximately the center of the open-end of the water-resistant bag (3), and while forming a tight seal along the edges of the open-end, both sides of the lead-wire routing section are folded to form L-shaped sealed regions (SR).

7. The battery pack as cited in claim 6 wherein the sealed regions (SR) are configured to approximate a T-shaped region by combining the two L-shaped regions, and the straight-line top section of the T-shaped region is positioned on the open-end-side of the water-resistant bag (3).

8. The battery pack as cited in claim 6 or claim 7 wherein the lead-wire routing section disposed between the tightly sealed regions is sealed closed with sealant (19).

9. The battery pack as cited in any one of the claims 5-8 wherein an air-vent (45) is provided in the water-resistant bag (3), and the air-vent is closed-off with a water-resistant patch (46), which is porous to air but not to moisture.

10. The battery pack as cited in claim 9 wherein the battery block (10) is provided with a circuit board holder (7) to hold the first circuit board (6), and the water-resistant patch (46) is disposed on the surface of the battery block (10) that is on the opposite side from the surface with the circuit board holder (7).

## Patentansprüche

1. Batteriepack, umfassend:
einen Batterieblock (10), der eine Vielzahl von Batteriezellen (1) aufweist, die in einer Batteriehalterung (2) aufgenommen sind;
eine erste Schaltkarte (6), die auf der Batteriehalterung (2) des Batterieblocks (10) angebracht ist, um eine erste Schutzschaltung (25) zu tragen, die eine Batteriezellen-(1)-Abnormalität und einen Reststromfluss detektieren kann;
eine zweite Schaltkarte (9) um eine zweite Schutzschaltung (26) zu tragen, die eine von der ersten Schutzschaltung (25) separate Struktur ist und geeignet ist, unabhängig von der ersten Schutzschaltung (25) eine Batteriezellen-(1)-Abnormalität und Restsstromfluss zu detektieren;
ein äußeres Gehäuse (4), um den Batterieblock (10) aufzunehmen; und
einen Ausgangsverbinder (15), der auf der Außenseite des äußeren Gehäuses (4) gebildet ist, um Ausgangsleistung des Batterieblocks (10) nach außen zu liefern,
**dadurch gekennzeichnet, dass**:
die zweite Schaltkarte (9) kleiner als die erste Schaltkarte (6) ist und innerhalb des äußeren Gehäuses (4) physisch von der ersten Schaltkarte (6) getrennt angeordnet ist.

2. Batteriepack gemäß Anspruch 1, wobei die zweite Schaltkarte (9) in einem Eckbereich des äußeren Gehäuses (4) in einer Orientierung gehalten ist, die in Bezug auf die erste Schaltkarte (6) geneigt ist.

3. Batteriepack gemäß Anspruch 2, wobei die zweite Schaltkarte (9) auf der Batteriehalterung (2) des Batterieblocks (10) angebracht ist, um sie in einem Eckbereich des äußeren Gehäuses (4) in einer geneigten Orientierung zu halten.

4. Batteriepack gemäß einem der Ansprüche 1 bis 3, wobei die zweite Schwellwertspannung für Reststrom der zweiten Schutzschaltung (26) höher als die erste Schwellwertspannung für Reststrom der ersten Schutzschaltung (25) eingestellt ist.

5. Batteriepack gemäß einem der Ansprüche 1 bis 4, wobei der Batterieblock (10) in einem wasserbeständigen Beutel (3) eingeschlossen und innerhalb des äußeren Gehäuses (4) aufgenommen ist.

6. Batteriepack gemäß Anspruch 5, wobei der Batterieblock (10) über Verbindungsleitungen (8) mit einem Ausgangsverbinder (15) verbunden ist,
wobei die Verbindungsleitungen (8) durch das offene Ende des wasserbeständigen Beutels (3) geführt sind, welcher den Batterieblock (10) einschließt, und
wobei die Verbindungsleitungen (8) ungefähr in der Mitte des offenen Endes des wasserbeständigen Beutels (3) angeordnet sind und, während eine enganliegende Dichtung entlang den Kanten des offenen Endes gebildet wird, beide Seiten des Verbindungsleitungs-Führungs-Abschnitts gefaltet sind, um L-förmige abgedichtete Bereiche (SR) zu bilden.

7. Batteriepack gemäß Anspruch 6, wobei die abgedichteten Bereiche (SR) konfiguriert sind, um durch Kombinieren der zwei L-förmigen Bereiche einem T-Bereich zu ähneln, und der gradlinige obere Abschnitt des T-förmigen Bereichs auf der Seite des offenen Endes des wasserbeständigen Beutels (3) positioniert ist.

8. Batteriepack gemäß Anspruch 6 oder 7, wobei der Verbindungsleitungs-Führungs-Abschnitt zwischen den enganliegend gedichteten Bereichen geschlossen mit einem Dichtmittel abgedichtet ist.

9. Batteriepack gemäß einem der Ansprüche 5 bis 8, wobei eine Entlüftung (45) in dem wasserbeständigen Beutel (3) vorgesehen ist und die Entlüftung mit einem wasserbeständigen Füllstück (46) geschlossen ist, das für Luft, jedoch nicht für Feuchtigkeit durchlässig ist.

10. Batteriepack gemäß Anspruch 9, wobei der Batterieblock (10) mit einer Schaltkabelhalterung (7) versehen ist, um die erste Schaltkarte (6) zu halten, und wobei das wasserbeständige Füllstück (46) auf der Oberfläche des Batterieblocks (10) angeordnet ist, die auf der von der Oberfläche mit der Schaltkartenhalterung (7) entgegengesetzten Seite ist.

## Revendications

1. Boîtier de batterie comprenant :
un bloc de batterie (10) ayant une pluralité de piles (1) logées dans un support de batterie (2) ;
une première carte de circuit imprimé (6) montée sur le support de batterie (2) du bloc de batterie (10) pour porter un premier circuit de protection (25) qui peut détecter une anomalie de la pile (1) et l'arrêt de la circulation du courant ;
une seconde carte de circuit imprimé (9) pour porter un second circuit de protection (26) qui est une structure séparée du premier circuit de protection (25) et peut détecter une anomalie de la pile (1) et l'arrêt de la circulation du courant indépendamment du premier circuit de protection (25) ;
un boîtier externe (4) pour loger le bloc de batterie (10) ; et
un connecteur de sortie (15) monté à l'extérieur du boîtier externe (4) pour délivrer la sortie du bloc de batterie (10) à l'extérieur,
**caractérisé en ce que** :
la seconde carte de circuit imprimé (9) est plus petite que la première carte de circuit imprimé (6) et est disposée à l'intérieur du boîtier externe (4), physiquement séparée de la première carte de circuit imprimé (6).

2. Boîtier de batterie selon la revendication 1, dans lequel la seconde carte de circuit imprimé (9) est retenue dans une région de coin du boîtier externe (4) dans une orientation inclinée par rapport à la première carte de circuit imprimé (6).

3. Boîtier de batterie selon la revendication 2, dans lequel la seconde carte de circuit imprimé (9) est montée sur le support de batterie (2) du bloc de batterie (10) pour la retenir dans une orientation inclinée, dans une région de coin du boîtier externe (4).

4. Boîtier de batterie selon l'une quelconque des revendications 1 à 3, dans lequel la seconde tension de seuil pour couper le courant avec le second circuit de protection (26) est plus haute que la première tension de seuil pour couper le courant avec le premier circuit de protection (25).

5. Boîtier de batterie selon l'une quelconque des revendications 1 à 4, dans lequel le bloc de batterie (10) est enfermé dans un sac résistant à l'eau (3) et logé à l'intérieur du boîtier externe (4).

6. Boîtier de batterie selon la revendication 5, dans lequel le bloc de batterie (10) est raccordé à un connecteur de sortie (15) via des fils de sortie (8),
dans lequel les fils de sortie (8) sont acheminés par l'extrémité ouverte du sac résistant à l'eau (3) enfermant le bloc de batterie (10), et
dans lequel les fils de sortie (8) sont disposés approximativement au centre de l'extrémité ouverte du sac résistant à l'eau (3), et tout en formant un joint étanche le long des bords de l'extrémité ouverte, les deux côtés de la section d'acheminement de fil de sortie sont pliés afin de former des régions étanches en forme de L (SR).

7. Boîtier de batterie selon la revendication 6, dans lequel les régions étanches (SR) sont configurées pour se rapprocher d'une région en forme de T en combinant les deux régions en forme de L, et la section supérieure en ligne droite de la région en forme de T est positionnée du côté de l'extrémité ouverte du sac résistant à l'eau (3).

8. Boîtier de batterie selon la revendication 6 ou la revendication 7, dans lequel la section d'acheminement de fil de sortie disposée entre les régions étanches est hermétiquement fermée avec un agent d'étanchéité (19).

9. Boîtier de batterie selon l'une quelconque des revendications 5 à 8, dans lequel un évent d'aération (45) est prévu dans le sac résistant à l'eau (3), et l'évent d'aération est fermé avec une étiquette résistante à l'eau (46) qui est poreuse à l'air mais pas à l'humidité.

10. Boîtier de batterie selon la revendication 9, dans lequel le bloc de batterie (10) est prévu avec un support de carte de circuit imprimé (7) pour supporter la première carte de circuit imprimé (6), et l'étiquette résistante à l'eau (46) est disposée sur la surface du bloc de batterie (10) qui est du côté opposé à la surface avec le support de carte de circuit imprimé (7).
